(19) **Europäisches Patentamt European Patent Office Office européen des brevets**

(11) **EP 2 109 122 A1**

(12) **EUROPÄISCHE PATENTANMELDUNG**

(43) Veröffentlichungstag:
**14.10.2009 Patentblatt 2009/42**

(51) Int Cl.:
*H01F 27/34* (2006.01)   *H01F 37/00* (2006.01)
*H01B 11/12* (2006.01)   *H02H 3/02* (2006.01)

(21) Anmeldenummer: **08154325.8**

(22) Anmeldetag: **10.04.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **ABB Schweiz AG**
**5400 Baden (CH)**

(72) Erfinder:
• **Zuckerberger, Adrian**
  **CH-5417, Untersiggenthal (CH)**

• **Bolgiani, Fabio**
  **CH-6500, Bellinzona (CH)**
• **Eckerle, John**
  **CH-4058, Basel (CH)**

(74) Vertreter: **ABB Patent Attorneys**
**C/o ABB Schweiz AG**
**Intellectual Property (CH-LC/IP),**
**Brown Boveri Strasse 6**
**5400 Baden (CH)**

(54) **Spulenbauelement zur Verwendung in einer Crowbar-Schaltung**

(57)     Die Erfindung betrifft ein Spulenbauelement (6) sowie eine leistungselektronische Schaltung, wobei die leistungselektronische Schaltung einen Kondensator (2) und eine Crowbar-Schaltung (3) umfasst. Die Crowbar-Schaltung (3) umfasst:

- das in Reihe zu dem Kondensator (2) geschaltetes Spulenbauelement (6), das einen Leiter aufweist, der eine Spulenwicklung mit einer Anzahl von Windungen bildet, um eine Induktivität bereitzustellen, wobei der Leiter aus paramagnetischem Material gebildet ist;

- eine Schalteranordnung (4), die ausgebildet ist, um den Kondensator (2) und das Spulenbauelement (6) zu einem Schwingkreis mit einer Resonanzfrequenz zu verbinden;

wobei das Material des Leiters eine relative Permeabilität $\mu_r$ aufweist, bei der der Leiter aufgrund eines auftretenden Skin-Effekts einen gegenüber dem rein Ohmschen Widerstand des Leiters erhöhten elektrischen Widerstand aufweist.

Fig. 1

**Beschreibung**

**Technisches Gebiet**

Die Erfindung betrifft ein Verfahren zum Dimensionieren eines elektrischen Spulenbauelementes für den Einsatz in einer Schutzschaltung, so dass ein Stromgradient in der Schutzschaltung beschränkt wird und eine Dämpfung bereitgestellt wird.

Die Erfindung betrifft weiterhin ein derartiges Bauelement und eine Schutzschaltung mit einem solchen Bauelement.

**Stand der Technik**

In der Leistungselektronik werden häufig Umrichter verwendet, um Gleichspannungen bzw. Wechselspannungen bereitzustellen. Derartige Umrichterschaltungen weisen Kondensatoren auf, die je nach Auslegung des Systems zeitweise Ladungen speichern können, die Energien bis zu 100 Joule oder mehr entsprechen. Kommt es zu einem Fehlerfall, so muss die in dem Kondensator gespeicherte Energie vernichtet werden.

Als Schutzschaltungen für elektrische Systeme dienen so genannte Crowbar-Schaltungen, die in einem Fehlerfall eine Versorgungsspannung kurzschließen und damit die zu schützende elektronische Schaltung schützen. Durch das Kurzschließen der Versorgungsspannung wird in der Regel eine Sicherung zum Auslösen gebracht, die die Versorgungsspannung permanent unterbricht. Crowbar-Schaltungen werden weiterhin verwendet, um kann in einem Fehlerfall einen Kondensator kurzzuschließen, um die darin gespeicherte Energie abzubauen.

Die Crowbar-Schaltung wird häufig mit einem Thyristor als einem Leistungsschalter betrieben. Thyristoren sind empfindlich gegenüber hohen Stromgradienten. Für deren Betrieb benötigt man daher eine Begrenzung des Stromgradienten. Eine solche Begrenzung des Stromgradienten durch den Thyristor wird mithilfe einer Drosselspule erreicht, das heißt mithilfe einer Induktivität, die den Anstieg des Stromes durch den Thyristor begrenzt.

Wird eine solche Drosselspule in Reihe mit dem oben erwähnten Kondensator des Umrichters geschaltet, so entsteht dadurch bei geschlossenem Thyristor (ausgelöste Crowbar-Schaltung) ein Schwingkreis, der zu einem Schwingen des Gesamtsystems führt. Um diese Schwingung schnell abklingen zu lassen, muss zusätzlich eine Dämpfung vorgesehen sein, die in Form eines Widerstands realisiert werden kann. Der Widerstand wandelt dann die in dem Kondensator gespeicherte Energie während des Abklingens in Wärmeenergie um.

Die Drosselspule muss darüber hinaus mit einer ausreichenden mechanischen Stabilität ausgebildet sein, da aufgrund der hohen, durch ihre Windungen fließenden Ströme von einigen 10 kA zwischen benachbarten Windungen erhebliche Kräfte auftreten, die zu einer Verformung der Spulenwicklung führen. Mechanische Stabilität kann erreicht werden, indem die Windungen auf einem geeigneten Träger fixiert werden. Eine solche Variante stellt jedoch einen erhöhten Aufwand bei ihrer Herstellung dar. Wünschenswerter ist dagegen eine Ausgestaltung der Drosselspule mit Windungen, die eine ausreichende Eigenstabilität aufweisen, so dass die Kräfte, die durch die durch ihre Windungen fließenden Ströme bewirkt werden können, die Drosselspule weder beschädigen noch zerstören. Dazu ist es jedoch erforderlich, dass das Material und die Leiterdicke des Leiters, mit dem die Drosselspule aufgebaut ist, so gewählt sind, dass die resultierende mechanische Festigkeit des Materials eine mechanische Verformung beim Fließen des Auslösestroms weitgehend vermeidet.

Herkömmliche Leiter werden in der Regel aus Kupfer oder einem ähnlichen gut leitfähigen Material ausgebildet. Die mechanische Festigkeit wird durch eine ausreichende Leiterdicke des Kupferleiters erreicht. Dadurch kann jedoch der erforderliche Widerstand für eine Dämpfung der beim Auslösen der Crowbar-Schaltung auftretenden Schwingung nicht durch den für die Drosselspule verwendeten Leiter bereitgestellt werden, da dieser mit einer ausreichenden Stärke vorgesehen werden muss. Dies macht das Vorsehen eines zusätzlichen Widerstandes notwendig.

Zur Realisierung der Crowbar-Schaltung mit einer derartigen Drosselspule aus einem Kupferleiter können aufgrund der hohen Energien, die in dem Kondensator gespeichert sein können, Kohlewiderstände oder dergleichen verwendet werden, die geeignet sind, die Energie des Kondensators aufzunehmen. Kohlewiderstände sind jedoch teuer. Zudem müssen diese zusätzlich zu den Drosselspulen vorgesehen werden, wodurch sich der Aufwand zur Realisierung einer solchen Crowbar-Anordnung erhöht.

**Darstellung der Erfindung**

Es ist daher Aufgabe der vorliegenden Erfindung, eine Crowbar-Schaltung zum Abführen der in dem Kondensator gespeicherten Energie zur Verfügung zu stellen, die in einfacher Weise ausgebildet ist und die zum Bereitstellen der Dämpfung und zum Reduzieren des Stromgradienten mit einem einzelnen Bauelement auskommt.

Diese Aufgabe wird durch das Spulenbauelement nach Anspruch 1 sowie durch die Schaltung mit einem solchen Spulenbauelement und eine Verwendung eines derartigen gemäß den nebengeordneten Ansprüchen gelöst.

Vorteilhafte Ausgestaltungen der Erfindung sind in den abhängigen Ansprüchen angegeben.

Gemäß einem ersten Aspekt ist ein Spulenbauelement zur Verwendung in einer Crowbar-Schaltung vorgesehen, wobei das Spulenbauelement einen Leiter aufweist, der eine Spulenwicklung mit einer Anzahl von Windungen bildet, um eine Induktivität bereitzustellen, wobei der Leiter aus paramagnetischem Material gebildet ist.

Gemäß einem weiteren Aspekt ist eine leistungselektronische bzw. elektrische Schaltung, insbesondere ein Umrichter, vorgesehen. Die Schaltung umfasst:

- einen Kondensator; und
- eine Crowbar-Schaltung,
- wobei die Crowbar-Schaltung aufweist:

  - ein in Reihe zu dem Kondensator geschaltetes obiges Spulenbauelement; und

  - eine Schalteranordnung, die ausgebildet ist, um den Kondensator und das Spulenbauelement zu einem Schwingkreis mit einer Resonanzfrequenz zu verbinden;

wobei das Material des Leiters eine relative Permeabilität $\mu_r$ aufweist, bei der der Leiter aufgrund eines durch die Resonanzfrequenz bewirkten Skin-Effekts einen gegenüber dem rein Ohmschen Widerstand des Leiters erhöhten elektrischen Widerstand aufweist.

Eine Idee der Erfindung besteht darin, ein Spulenbauelement als Drosselspule einer Crowbar-Schaltung zum Abführen der in einem Kondensator gespeicherten Energie bereitzustellen. Dabei soll das Spulenbauelement sowohl eine Induktivität zum Begrenzen eines Stromgradienten, einen elektrischen Widerstand zum Dämpfen einer ausgelösten Schwingung als auch eine ausreichende mechanische Stabilität zum Widerstehen der durch hohe Ströme bewirkten Kräfte aufweisen. Das Spulenbauelement ist in Form einer Spulenwicklung realisiert, deren Leiterquerschnitt beliebig groß sein kann, jedoch ausreichend groß ist, um den Kräften zwischen den einzelnen Windungen möglichst ohne Verformung zu widerstehen. Weiterhin weist das Spulenbauelement einen elektrischen Widerstand auf, der eine Dämpfung der in dem durch den Kondensator und die Induktivität gebildeten Schwingkreis bewirkten Schwingung führt. Der elektrische Widerstand ist dabei gegenüber dem rein Ohmschen Widerstand, der durch die Wahl des Leitermaterials des Leiters (spezifischer Widerstand), mit dem die Spulenwicklung ausgebildet ist, und deren Querschnitt und Länge bestimmt ist, weiterhin aufgrund des bei der Resonanzfrequenz des Schwingkreises auftretenden Skin-Effekts reduziert.

Der Skin-Effekt bewirkt, dass für die Stromleitung effektiv nur ein bestimmter Außenbereich bei der Berechnung des Ohmschen Widerstands bei einer bestimmten Frequenz berücksichtigt werden muss. Die Skin-Tiefe, d.h. die Dicke des Außenbereichs des Leiters, die effektiv den elektrischen Widerstand bei einer bestimmten Frequenz bestimmt, hängt weiterhin von der relativen Permeabilität des für den Leiter des Spulenbauelements verwendeten Materials ab. Es wird daher vorgesehen, das Spulenbauelement mit einem Leiter aus einem Material auszubilden, das eine relative Permeabilität aufweist, die bei Frequenzen im Bereich der Schwingungen, die durch den Kondensator und die Induktivität des Spulenbauelements hervorgerufen werden, zu einem Skin-Effekt führen, der den Widerstand des Spulenbauelements erhöht, so dass die Schwingung schneller abklingt. Mit anderen Worten, Kondensator und Induktivität des Spulenbauelements wirken als Schwingkreis mit einer Resonanzfrequenz, mit der bei Auslösen der Crowbar-Schaltung eine Spannung bzw. Strom durch die Gesamtanordnung schwingt, wobei bei geeigneter Wahl des Materials des Spulenbauelements mit einer ausreichend hohen relativen Permeabilität der Skin-Effekt auftritt, wodurch der elektrische Widerstand des Spulenbauelements auf einen Widerstand erhöht wird, der die Zeit des Abklingens der Schwingung verkürzt.

Weiterhin kann das paramagnetische Material als Hauptbestandteil Eisen oder Stahl enthalten. Insbesondere kann das paramagnetische Material so gewählt sein, dass es eine relative Permeabilität von $\mu_r > 50$, vorzugsweise von $\mu_r > 150$ aufweist.

Gemäß einer Ausführungsform kann der Leiter eine Querschnittsfläche von mehr als 5 mm², vorzugsweise von mehr als 10 mm², insbesondere in einem Bereich von 5 - 20 mm² aufweisen.

Weiterhin kann der Leiter mit einer Isolierung versehen sein, so dass die Windungen gegeneinander isoliert sind. Die Isolierung umschließt den Leiter vorzugsweise im Bereich der Windungen vollständig.

Gemäß einer Ausführungsform können die Enden des Leiters von der Spulenwicklung um nicht mehr als die Hälfte des Durchmessers der Spulenwicklung abstehen.

Die Enden des Leiters des Spulenbauelements können jeweils mit einem Kontaktierungselement zum Anschließen und zum Halten des Spulenbauelements versehen sein. Das Kontaktierungselement kann dazu mit einer Kontaktöse, einer Klemmverbindung oder dergleichen versehen sein.

Gemäß einer Ausführungsform der Schaltung weist das Spulenbauelement eine Induktivität auf, die eine Resonanzfrequenz des Schwingkreises von zwischen 1 bis 10kHz ergibt.

Weiterhin kann das Spulenbauelement einen durch den Skin-Effekt bei der Resonanzfrequenz bewirkten elektrischen Widerstand aufweisen, der zu einem Abklingen der nach dem Verbinden des Spulenbauelements mit dem Kondensator auftretenden Schwingung während eines Zeitraums von 0,1 bis 10ms führt.

Gemäß einem weiteren Aspekt ist die Verwendung des obigen Spulenbauelements in der obigen Schaltung vorgesehen. Dabei wird der Kondensator über das Spulenbauelements entladen, so dass eine hervorgerufene Schwingung des Schwingkreises mit einer Dämpfung abklingt, wobei die Ladungsenergie des Kondensators an dem elektrischen Widerstand des Spulenbauelementes abgebaut wird.

## Kurze Beschreibung der Zeichnungen

Bevorzugte Ausführungsformen der Erfindung werden nachfolgend anhand der beigefügten Zeichnung näher erläutert. Es zeigen:

Fig. 1 eine Crowbar-Schaltung zum Anschließen an einen Kondensator in einer Leistungsschaltung;
Fig. 2 eine perspektivische Darstellung des Spulenbauelements, das in der Crowbar-Schaltung der Fig. 1 verwendet wird;
Fig. 3 ein Signal-Zeit-Diagramm zur Darstellung des Verlaufs der Ströme durch den Thyristor der Crowbar-Schaltung der Fig. 1; und
Fig. 4 den Verlauf der Spannung und des Stroms über dem Spulenbauelement der Crowbar-Schaltung der Fig. 1.

## Wege zur Ausführung der Erfindung

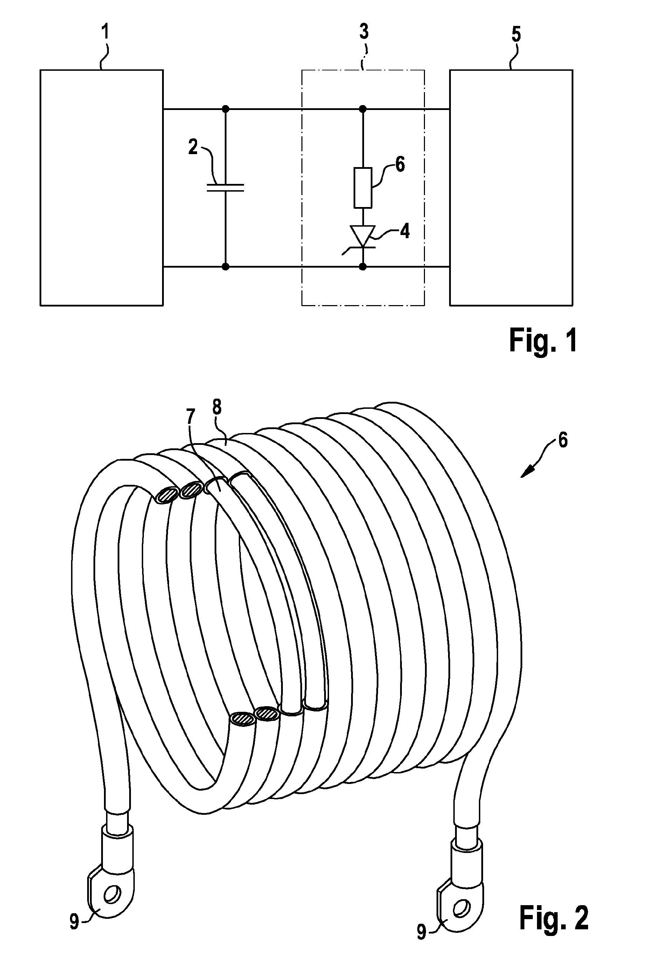

In Fig. 1 ist ein Gesamtsystem dargestellt. Das Gesamtsystem umfasst einen Umrichter 1, wie z.B. einen Wechselrichter, einen Gleichrichter und dgl. Der Umrichter 1 ist mit einem Element zur kapazitiven Energiespeicherung in Form eines Kondensators 2 verbunden oder umfasst alternativ den Kondensator. Der Umrichter 1 ist mit einem Verbraucher 5 z.B. in Form eines Elektromotors verbunden, um diesen in geeigneter Weise anzutreiben. Während des Betriebs des Gesamtsystems wird der Kondensator 2 aufgeladen und speichert während des Betriebs eine Ladung, die einer Energie von 100 Joule oder mehr entsprechen kann.

Bei einem Abschalten des Umrichters 1 z.B. aufgrund eines Fehlerfalls, muss die in dem Kondensator 2 gespeicherte Ladung schnellstmöglich abgebaut werden, so dass keine Spannung an dem Verbraucher 5 mehr anliegt. Das Abführen der Energie aus dem Kondensator 2 übernimmt eine so genannte Crowbar-Schaltung 3 dadurch, dass der Kondensator 2 durch Kurzschließen entladen wird.

Die Crowbar-Schaltung 3 umfasst einen Leistungsschalter 4, der im gezeigten Ausführungsbeispiel als Thyristor ausgebildet ist. Parallel zu dem Leistungsschalter 4 kann eine Freilaufdiode (nicht gezeigt) vorgesehen sein. Der Leistungsschalter 4 wird beim Auslösen der Crowbar-Schaltung 3 geschlossen, so dass je nach Polung der Kondensatorspannung eine leitende Verbindung durch den Leistungsschalter 4 zwischen den Anschlüssen des Kondensators 2 gebildet wird.

Die Crowbar-Schaltung 3 umfasst ein Spulenbauelement 6, das in Reihe zu dem Leistungsschalter 4 geschaltet ist, so dass bei Schließen des Leistungsschalter 4 die beiden Anschlüsse des Kondensators 2 über das Spulenbauelement 6 und den Leistungsschalter 4 miteinander verbunden werden. Das Spulenbauelement 6 stellt in einem einzigen Bauelement gleichzeitig eine Induktivität und einen Widerstand bereit. Dadurch wird gemeinsam mit dem Kondensator 2 ein Schwingkreis gebildet, der bei Auslösen der Crowbar-Schaltung 3 mit einer von der Kapazität des Kondensators 2 und der Induktivität des Spulenbauelements 6 bestimmten Resonanzfrequenz

$$f = \frac{1}{2\pi\sqrt{LC}}$$

schwingt (unter der Annahme, dass der Einfluss des Widerstands vernachlässigbar ist). Durch den Widerstand des Spulenbauelements 6 klingt die Schwingung des Schwingkreises gemäß einer Dämpfung ab und leitet damit die Energie aus dem Kondensator 2 über einen bestimmten Zeitraum ab. Nach Abklingen der Schwingung ist die Energie aus dem Kondensator 2 abgeführt.

Die Crowbar-Schaltung 3 ist für den Einsatz in leistungselektronischen Systemen ausgebildet und in der Lage, Kondensatorspannungen von 1000 V oder mehr abzubauen. Die durch das Spulenbauelement 6 fließenden Ströme können dabei mehrere 10 kA, wie z.B. 20 kA oder mehr betragen.

Das Spulenbauelement 6 ist vorzugsweise aus einem länglichen Leiter ausgebildet, der in Form einer Spulenwicklung in mehreren Windungen geformt ist. Die hohen Ströme, die beim Auslösen der Crowbar-Schaltung durch das Spulenbauelement 6 fließen können, bewirken eine hohe Anziehungskraft (abhängig von dem Aufbau und insbesondere von dem Abstand zwischen den Windungen) zwischen den Windungen der Spulenwicklung des Spulenbauelements 6. Diese Anziehungskraft kann bei unzureichender Stabilität des Spulenbauelements 6 zu einer Verformung führen. Daher muss das Spulenbauelement 6 mit einer ausreichenden Stabilität versehen werden. Dies wird dadurch erreicht, dass der längliche Leiter des Spulenbauelements 6 mit einem ausreichenden Querschnitt vorgesehen wird, um eine Eigenstabilität des Spulenbauelements zu gewährleisten, die ausreicht, um der durch den Stromfluss bewirkten Kraft zu widerstehen. Dadurch kann das Spulenbauelement 6 ohne sonstige unterstützende Vorrichtungen zur Fixierung und zum Tragen des Leiters ausgebildet werden.

Die Anzahl der Windungen der Spulenwicklung des Spulenbauelements 6 richtet sich nach der gewünschten Induktivität, die die Resonanzfrequenz des Schwingkreises, der aus dem Kondensator 2 und dem Spulenbauelement 6 gebildet wird, bestimmt. Aufgrund der bei hohen Stromflüssen wirkenden Kräfte ist die Gesamtlänge des Leiters auf die für die Spulenwicklung benötigte Länge begrenzt, da ansonsten zusätzliche Maßnahmen zum Befestigen und Sichern der nicht die Windungen der Spulenwicklung bildenden Leiterabschnitte benötigt werden. Dadurch ist die Gesamtlänge des zu verwendenden Leiters auf die für die Windungen der Spulenwicklung benötigte Leiterlänge beschränkt.

Aus der Länge und dem Querschnitt des Leiters des Spulenbauelements 6 ergibt sich ein Ohmscher Widerstand, der bei Verwendung von herkömmlichen Materialien, wie z.B. Kupfer, zu niedrig ist, um zu einem schnellen Abklingen der Schwingung des Schwingkreises bei Auslösen der Crowbar-Schaltung 3 führen zu können. Anstatt nun ein zusätzliches elektrisches Bauelement als Ohmschen Widerstand in Reihe zu dem Spulenbauelement 6 zu schalten, ist vorgesehen, das Material des Leiters des Spulenbauelements 6 so zu wählen, dass sich der Ohmsche Widerstand erhöht. Jedoch muss aus Gründen der oben beschriebenen Eigenstabilität ein Metall als Leitermaterial verwendet werden. Der Ohmsche Widerstand von Metallen reicht jedoch nicht aus, die Schwingung in einer ausreichend kurzen Zeit abklingen zu lassen. Es ist daher vorgesehen, als Material für den Leiter des Spulenbauelements 6 ein paramagnetisches Metall vorzusehen. Dadurch kann der effektive elektrische Widerstand bei der durch Kondensator 2 und Spulenbauelement 6 bewirkten Resonanzfrequenz aufgrund des Skin-Effekts so erhöht werden, dass ein Abklingen in ausreichend kurzer Zeit erfolgen kann.

Gemäß einer Ausführungsform ist daher vorgesehen, anstelle des bislang verwendeten Kupfers als gut leitendes Leitermaterial ein leitendes Material, insbesondere ein Metall, mit paramagnetischen Eigenschaften vorzusehen, so dass bei der Resonanzfrequenz des Schwingkreises der Skin-Effekt wirkt und den effektiven Widerstand des Spulenbauelements 6 entsprechend erhöht. Vorzugsweise ist als Material für den Leiter Baustahl vorgesehen, der eine ausreichend hohe mechanische Stabilität aufweist und der weiterhin nach Messungen des Erfinders eine relative Permeabilität $\mu_r$ ≈175 aufweist. Auch andere Materialien mit einer guten Leitfähigkeit, die im Bereich von Metallen, d.h. im Bereich eines spezifischen Widerstands von 0,015 bis 0,3 $\Omega \cdot$mm$^2$/m, liegen und paramagnetisch sind, insbesondere eine relative Permeabilität von $\mu_r$ > 50, vorzugsweise von $\mu_r$ > 100 oder $\mu_r$ > 150 aufweisen, sind für die Verwendung als Leitermaterial des Spulenbauelements 6 geeignet. Weiterhin bewirkt der Skin-Effekt, dass die relative Permeabilität bei zunehmender Frequenz abnimmt, so dass sich die effektive Induktivität mit steigender Frequenz verringert.

In Fig. 2 ist eine konkrete Ausgestaltung eines solchen Spulenbauelements 6 gezeigt. Es zeigt eine Spulenwicklung mit zwölf Windungen mit einem Leiter 7 aus Baustahl mit 6 mm Durchmesser. Der Durchmesser der Windungen beträgt ca. 10 cm. Die Windungen gehen direkt in die Leiterenden über. Die Leiterenden weisen Anschlüsse 9, z.B. in Form von Kontaktösen, auf und stehen maximal um nicht mehr als den halben Durchmesser der Windungen von den Windungen in axialer oder radialer Richtung des Spulenbauelements 6 ab. Der Leiter 7 ist mit einer Isolierung 8 versehen, damit die aufeinander liegenden Windungen voneinander elektrisch isoliert sind.

Messungen an diesem Spulenbauelement 6 haben eine folgende Abhängigkeit der Induktivität und des Ohmschen Widerstandes von der Frequenz ergeben:

| f(kHz) | L($\mu$H) | R(m$\Omega$) |
|--------|-----------|--------------|
| 0,1    | 16,8      | 16,8         |
| 0,12   | 16,8      | 17,2         |
| 1      | 11,25     | 37,1         |
| 10     | 7,78      | 109          |
| 20     | 7,3       | 156          |
| 100    | 6,6       | 360          |

Der aus dem Skin-Effekt resultierende Widerstand kann auch durch folgende Formel näherungsweise geschrieben werden:

$$R = \rho \cdot l / A,$$

wobei bei einem Rundleiter

$$A = A_{eff} = \pi D^2 - \pi (D - \delta)^2$$

mit

$$\delta = \frac{1}{\sqrt{\pi \cdot f \cdot \mu_0 \cdot \mu_r \cdot \varsigma}}$$

entspricht, wobei $\rho$ (in $\Omega$ mm$^2$ / m) dem spezifischen Widerstand des Leiters, l (in m) der Länge des Leiters, A (in mm$^2$) der Querschnittsfläche des Leiters, $\delta$ (in mm) der Skin-Tiefe, D (in mm) dem Durchmesser des Leiters, f der Resonanzfrequenz des Schwingkreises, $\mu_0 \cdot$der Permeabilität, $\mu_r \cdot$der relativen Permeabilität und $\zeta$ (in m / $\Omega$ mm$^2$) der elektrischen Leitfähigkeit entsprechen.

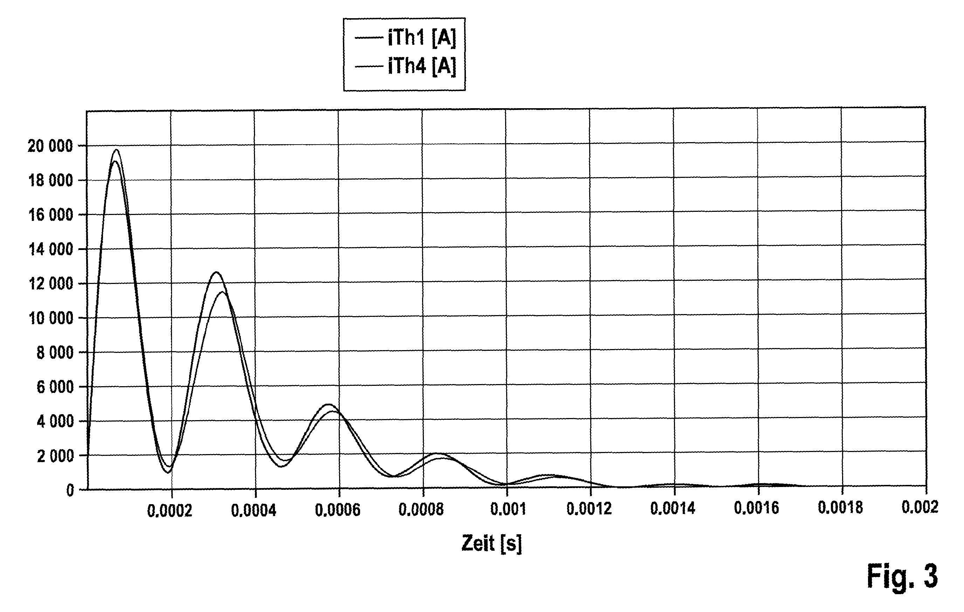

In Fig. 3 sind die Ströme durch den Leistungsschalter 4 über der Zeit t nach einem Auslösen der Crowbar-Schaltung 3 aufgetragen. Man erkennt, dass ein Strom von bis zu 20 kA durch den Schwingkreis fließt, wodurch eine erhebliche mechanische Stabilität erforderlich ist. Weiterhin erkennt man, dass die Schwingung des Schwingkreises nach 1 ms im Wesentlichen abgeklungen ist und nach 2 ms nicht mehr detektierbar ist.

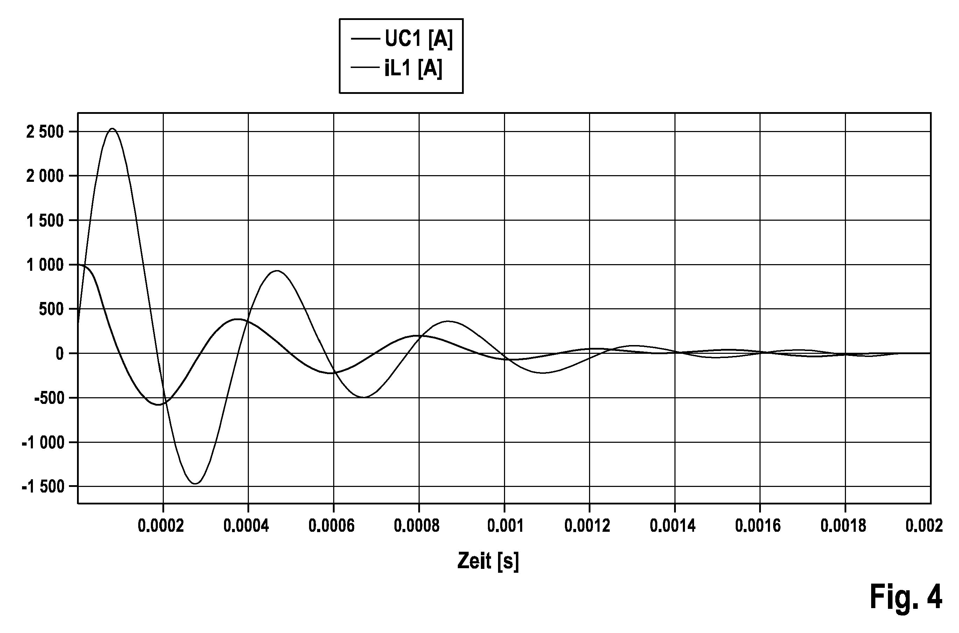

In Fig. 4 sind die Verläufe der Spannung und des Stroms über dem Spulenbauelement 6 für eine anfängliche Kondensatorspannung von 1 kV, einer Kapazität des Kondensators von 200 $\mu$F, einer Induktivität des Spulenbauelements 6 von 19 $\mu$H und einem effektiven

Widerstand des Spulenbauelements 6 von 0,1 Ω bei der sich ergebenden Resonanzfrequenz von ca. 3kHz über der Zeit t dargestellt.

Die Dimensionierung des Spulenbauelements 6 erfolgt aufgrund der vielen Freiheitsgrade empirisch, wobei man in aller Regel ausgehend von der Wahl des leitfähigen, paramagnetischen Materials als Leiter, im Allgemeinen ein Metall, mit einer relativen Permeabilität zwischen 50 und 10.000 ausgeht. Die Größe des Querschnitts wird entsprechend der gewünschten Eigenstabilität und des Festigkeit des Materials des Leiters gewählt.

Aus dem Leiter wird eine Spulenwicklung erstellt, die eine Induktivität aufweist, die so an die Kapazität des Kondensators 2 angepasst ist, dass eine Resonanzfrequenz des Schwingkreises zwischen 0,1 kHz und 100 kHz, vorzugsweise zwischen 1 kHz und 10kHz, weiter bevorzugt zwischen 2 und 5 kHz, insbesondere bei 3 kHz gebildet wird. Entsprechend den obigen Formeln ergibt sich unter Berücksichtigung des Skin-Effekts bei der Resonanzfrequenz abhängig vom gewünschten Widerstand die Länge des Leiters, die für die Spulenwicklung zur Verfügung steht. Die Wahl des gewünschten Widerstands hängt davon ab, nach welcher Zeitdauer die angeregte Schwingung des Schwingkreises abgeklungen sein soll.

Gemäß der Wheeler-Formel

$$L = N^2\, d^2 \cdot / \,(0{,}7\, d + 1{,}57\, b)$$

(N: Windungszahl, d (in mm): Durchmesser der Zylinderspule, b (in mm): Länge der Zylinderspule), die die genäherte Induktivität L (in μH) einer Zylinderspule angibt, lassen sich somit Maße für das Spulenbauelement 6 bei vorgegebener Länge des Leiters 7 bestimmen. Durch geeignete Wahl der Anzahl der Windungen der Spulenwicklung und des Durchmessers der Windung kann die Induktivität der Spulenwicklung festgelegt werden. Auch hier muss der Skin-Effekt berücksichtigt werden. Wie in obiger Tabelle gezeigt, hängt die Induktivität auch von der Resonanzfrequenz ab und beeinflusst die Resonanzfrequenz, so dass man in der Regel iterativ vorgehen muss, um die Dimensionen der Spulenwicklung zu bestimmen.

Vorzugsweise ist der Widerstand so gewählt, dass eine Abklingzeit von ca. 1 bis 2 ms erreicht wird. Als bevorzugtes Material für die Spulenwicklung des Spulenbauelementes 6 bietet sich Baustahl an, da dieses Material eine ausreichende mechanische Stabilität aufweist und kostengünstig ist und mit einer relativen Permeabilität von ca. 175 geeignet ist (z.B. bei 3 kHz), das Spulenbauelement 6 zu realisieren.

**Bezugszeichenliste**

1 elektrische bzw. elektronische Schaltung
2 Kondensator
3 Crowbar-Schaltung
4 Thyristor
5 Verbraucher
6 Spulenbauelement
7 Leiter
8 Isolierung
9 Anschluss

**Patentansprüche**

1. Spulenbauelement (6) zur Verwendung in einer Crowbar-Schaltung (3), wobei das Spulenbauelement (6) einen Leiter (7) aufweist, der eine Spulenwicklung mit einer Anzahl von Windungen bildet, um eine Induktivität bereitzustellen, **dadurch gekennzeichnet, dass** der Leiter (7) aus paramagnetischem Material gebildet ist.

2. Spulenbauelement (6) nach Anspruch 1, **dadurch gekennzeichnet, dass** das paramagnetische Material als Hauptbestandteil Eisen oder Stahl enthält.

3. Spulenbauelement (6) nach Anspruch 1 oder 2, **dadurch gekennzeichnet, dass** das paramagnetische Material so gewählt ist, dass es eine relative Permeabilität von $\mu_r > 50$ aufweist.

4. Spulenbauelement (6) nach einem der Ansprüche 1 bis 3, **dadurch gekennzeichnet, dass** der Leiter (7) eine Querschnittsfläche von mehr als 5 mm$^2$, mehr als 10mm$^2$ oder mehr als 15mm$^2$ aufweist.

5. Spulenbauelement (6) nach einem der Ansprüche 1 bis 4, **dadurch gekennzeichnet, dass** der Leiter (7) mit einer Isolierung (8) versehen ist, so dass die Windungen gegeneinander isoliert sind.

6. Spulenbauelement (6) nach einem der Ansprüche 1 bis 5, **dadurch gekennzeichnet, dass** die Enden des Leiters (7) von der Spulenwicklung um nicht mehr als die Hälfte des Durchmessers der Spulenwicklung abstehen.

7. Spulenbauelement (6) nach einem der Ansprüche 1 bis 6, **dadurch gekennzeichnet, dass** die Enden des Leiters (7) von der Spulenwicklung jeweils mit einem Kontaktierungselement (9) zum Anschließen des Spulenbauelements (6) versehen sind.

8. Leistungselektronische Schaltung, insbesondere mit einem Umrichter (1), umfassend

- einen Kondensator (2); und
- eine Crowbar-Schaltung (3),

wobei die Crowbar-Schaltung (3) umfasst:

- ein in Reihe zu dem Kondensator (2) geschaltetes Spulenbauelement (6) nach einem der Ansprüche 1 bis 7;
- eine Schalteranordnung (4), die ausgebildet ist, um den Kondensator (2) und das Spulenbauelement (6) zu einem Schwingkreis mit einer Resonanzfrequenz zu verbinden;

**dadurch gekennzeichnet,**
**dass** das Material des Leiters (7) eine relative Permeabilität $\mu_r$ aufweist, bei der der Leiter (7) aufgrund eines durch die Resonanzfrequenz bewirkten Skin-Effekts einen gegenüber dem rein Ohmschen Widerstand des Leiters (7) erhöhten elektrischen Widerstand aufweist.

9. Schaltung nach Anspruch 8, **dadurch gekennzeichnet,**
**dass** das Spulenbauelement (6) eine Induktivität aufweist, die eine Resonanzfrequenz des Schwingkreises von zwischen 1 bis 10kHz ergibt.

10. Schaltung nach Anspruch 8 oder 9, **dadurch gekennzeichnet,**
**dass** das Spulenbauelement (6) einen durch den Skin-Effekt bei der Resonanzfrequenz bewirkten elektrischen Widerstand aufweist, der zu einem Abklingen der durch das Verbinden des Spulenbauelements (6) mit dem Kondensator (2) auftretenden Schwingung während eines Zeitraums von 0,1 bis 10ms führt.

11. Verwendung des Spulenbauelements (6) nach einem der Ansprüche 1 bis 7 in einer Schaltung nach Anspruch 8, wobei der Kondensator (2) über das Spulenbauelement (6) so entladen wird, dass eine während des Entladens hervorgerufene Schwingung des Schwingkreises mit einer Dämpfung abklingt, wobei die Ladungsenergie des Kondensators (2) durch den elektrischen Widerstand des Spulenbauelementes (6) abgebaut wird.

Fig. 1

Fig. 2

Fig. 3

EP 2 109 122 A1

Fig. 4

**Europäisches Patentamt**

**Nummer der Anmeldung**

EP 08 15 4325

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 933 980 A (PICKER INT INC [US]) 4. August 1999 (1999-08-04) * Absätze [0002] - [0004], [0009] - [0012], [0014], [0015], [0017], [0018]; Abbildungen 1,2a * ----- | 1-11 | INV. H01F27/34 H01F37/00 H01B11/12 H02H3/02 |
| X | US 5 235 311 A (PERSON HERMAN R [US] ET AL) 10. August 1993 (1993-08-10) * Spalte 1, Zeilen 16-27 * * Spalte 2, Zeile 51 - Spalte 3, Zeile 17; Abbildungen 1-4 * * Spalte 3, Zeile 66 - Spalte 4, Zeile 12; Abbildung 13 * ----- | 1-11 | |
| X | US 2 383 473 A (DAWSON JOHN W ET AL) 28. August 1945 (1945-08-28) * Seite 3, Spalte 1, Zeile 43 - Spalte 2, Zeile 8; Abbildung 1 * ----- | 1-11 | |
| A | US 5 734 256 A (LARSEN EINAR V [US] ET AL) 31. März 1998 (1998-03-31) * Spalte 4, Zeilen 1-14; Abbildung 3 * * Spalte 5, Zeilen 7-32; Abbildung 5 * ----- | 8-11 | RECHERCHIERTE SACHGEBIETE (IPC) H01F H02H H01B F16F |
| A | US 5 374 853 A (LARSEN EINAR V [US] ET AL) 20. Dezember 1994 (1994-12-20) * Spalte 4, Zeile 67 - Spalte 5, Zeile 19; Abbildung 1 * * Spalte 11, Zeile 53 - Spalte 12, Zeile 5 * ----- | 8-11 | |

Der vorliegende Recherchenbericht wurde für alle Patentansprüche erstellt

| Recherchenort | Abschlußdatum der Recherche | Prüfer |
|---|---|---|
| Den Haag | 5. September 2008 | Teske, Ekkehard |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 15 4325

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 0933980 | A | 04-08-1999 | JP | 2000036418 A | 02-02-2000 |
| | | | US | 5978446 A | 02-11-1999 |
| US 5235311 | A | 10-08-1993 | KEINE | | |
| US 2383473 | A | 28-08-1945 | KEINE | | |
| US 5734256 | A | 31-03-1998 | US | 6021035 A | 01-02-2000 |
| US 5374853 | A | 20-12-1994 | KEINE | | |

EPO FORM P0461

Für nähere Einzelheiten zu diesem Anhang : siehe Amtsblatt des Europäischen Patentamts, Nr.12/82